# EUROPEAN PATENT APPLICATION

(11) **EP 3 722 386 A1**
(43) Date of publication of application: **14.10.2020**
(21) Application number: 19167873.9
(22) Date of filing: 08.04.2019
(51) Int. Cl.: C09J 5/06

(54) **METHOD FOR ADHESIVELY BONDING A HEAT STABLE SUBSTRATE USING A SURFACE TEMPERATURE CONTROLLED HEATING DEVICE**

(71) Applicant: SIKA TECHNOLOGY AG, 6340 Baar (CH)
(72) Inventor: Davis, Stephen, Rochester, MI Michigan 48307 (US)
(74) Representative: Sika Patent Attorneys

(57) **Abstract**

The present invention relates to a method for adhesively bonding a heat stable substrate using a one component adhesive and a heating device. The one-component adhesive is applied and cured to form a bond between the parts of the heat stable substrate. The method of the invention is especially suitable for performing vehicle repair and assembly operations.

## Description

### Technical field

The present invention relates to a method for adhesively bonding a heat stable substrate. More specifically to a method for adhesively bonding a heat stable substrate by applying a one component adhesive using a surface temperature controlled heating device.

### Background

In the field of automotive repair and assembly, the type of technique employed for performing a repair or assembly operation plays a vital role in increasing the useful life of the automotive. More specifically in case of automotive repair operations, it is extremely difficult to attain optimal performance at the repair site. Effectiveness of the repair operation is decided on the technique used for joining different materials or substrates.

The joining of materials by bonding using adhesives is generally known. An adhesive is generally a nonmetallic material which joins workpieces to one another by surface attachment (adhesion) and interior strength (cohesion).

Adhesive bonding has numerous advantages in comparison to other joining methods such as riveting, welding and screwing. For example, adhesives promote a uniform distribution of stress over the entire bond area, which is beneficial for both static and dynamic strength of the bond. Moreover, there is generally no damage to the surface and microstructure. In addition, adhesives may provide a sealing function. A further advantage comes into play particularly in the context of lightweight construction, since the use of adhesives allows a considerable weight saving.

Typically, automotive repair techniques involve use of structural adhesives, especially one-component thermosetting structural adhesives, preferably one-component epoxy-based adhesives. The one-component thermosetting structural adhesive systems are used to bond a variety of heat stable substrates including metal, coated metal, aluminum, a variety of plastic and filled plastic substrates, fiberglass and the like.

One-component adhesive systems require a heat cure for crosslinking the polymer. Further, these adhesive systems are sensitive to temperature gradient as slight variation in the curing temperature can affect the cross-linking process and the quality of repair is adversely affected. In addition, many polymers are not thermally stable at high temperatures (i.e. temperature exceeding 200°C), resulting in burning and degradation of the polymer matrix. In order to impart desired performance characteristics within the adhesive system, it is extremely important that the appropriate amount of heat is provided at the repair point for the appropriate amount of time, as heat curing is dependent upon both temperature and time. If the adhesive is not cured at a high enough temperature for a long enough period of time, it could result in failure.

The use of heat cure in vehicle repair is limited by methods to control the cure temperature. It is not practical to put an automobile in an oven to cure adhesive at repair point. The use of typical heating means such as heat gun, torch, infrared heaters lack precise control of bond temperature. Overheating or under heating of one component structural adhesive will result in sub optimal performance such as strength.

Thus, it is a challenge to ensure the correct cure of the adhesive system. Accordingly, there is a need for devising an improved method for adhesively bonding heat stable substrates, especially in the field of vehicle repair and assembly.

### Summary of the invention

The present invention was made in a view to overcome the problems described above, and one of the objects of the present invention is to provide a method for adhesively bonding a heat stable substrate by using a one-component adhesive. The heat stable substrate includes a first part **S1** and a second part **S2.**

The process of the present invention comprises the steps of applying a one-component adhesive to the surface of a first part **S1** of the heat-stable substrate. Further, contacting the applied one component adhesive with the surface of a second part **S2** of the heat-stable substrate. The process also comprises the steps of measuring the surface temperature of the heat stable substrate using a heating device, wherein the heating device is a surface temperature-controlled heating device that comprises at least one contactless temperature sensor. The process further comprises the steps of heat curing the one component adhesive at a temperature of 100-220°C, more particularly of 120-200°C, preferably between 160 and 190°C using the heating device

In particular, the one-component adhesive is a heat curable structural adhesive, more preferably a one-component thermosetting epoxy resin adhesive. Particularly, the the one-component thermosetting epoxy resin adhesive comprises at least one epoxy resin **A** having on average more than one epoxide group per molecule, wherein fraction of the epoxy resin **A** having on average more than one epoxide group per molecule is from 25 -70 wt%, 25 -60 wt%, 30 - 55 wt%, 30 - 50 wt%, more preferably 30 -45 wt%, based on the total weight of the one-component thermosetting epoxy resin adhesive.

Particularly, the one-component thermosetting epoxy resin adhesive comprises at least one latent hardener, wherein the said latent hardener is selected from the group consisting of dicyandiamide, guanamines, guanidines, aminoguanidines and derivatives thereof, substituted ureas, imidazoles and amine complexes, preferably dicyandiamide.

Particularly, the one-component thermosetting epoxy resin adhesive comprises at least one toughness improver **D,** the fraction of toughness improver **D** being preferably from 5 -30 wt%, 7 -25 wt%, 10 -20 wt%, more preferably 10 - 15 wt%, based on the total weight of the one-component thermosetting epoxy resin adhesive.

The contactless temperature sensor present on the heating device is infrared type. Further, the heating device used to implement the method of the present invention is preferably a heat gun, more preferably a hand-held heat gun. The heating device comprises at least one heating element which is in communication with a microprocessor. Particularly, the contactless temperature sensor and the microprocessor form a feedback loop for controlling the operation of the heating element of the heating device.

Particularly, the heating device automatically regulates the heating element to maintain desired surface temperature the target.

In a further aspect, the invention relates to use of the above described method for adhesively bonding or strengthening metal structures or for strengthening filling of cavities in vehicle construction or sandwich panel construction.

In a yet another aspect, the invention relates to an article comprising a cured adhesively bonded assembly, the cured adhesively bonded assembly being obtainable by the method as described above.

Further aspects of the present invention are subjects of further independent claims. Particularly preferred embodiments are subjects of the dependent claims.

### Brief Description of the Drawings

Fig. 1a illustrates a perspective view of a heating device in accordance with an embodiment of the invention.
Fig. 1b illustrates a perspective view of display screen of the heating device in accordance with an embodiment of the invention.
Fig. 2 illustrates a perspective view of a heating device performing the bonding operation in accordance with an embodiment of the invention.
Fig. 3a depict photographic image of the heating device performing the bonding operation in accordance with an embodiment of the invention.
Fig. 3b depict photographic image of the heat stable substrate in accordance with an embodiment of the invention.
Fig. 4 depict photographic image of Liquid crystal display screen of the heating device in accordance with an embodiment of the invention.
Fig. 5 depict a flow chart for the method of the invention in accordance with an embodiment of the invention.
Fig. 6 depict the photographic images of the test specimen in accordance with the embodiments of the invention.

### Detailed description of the Invention

For the purposes of the following detailed description, it is to be understood that the invention may assume various alternative variations and step sequences, except where expressly specified to the contrary.

In the context of the present invention, the following definitions may apply to the terms listed below, unless specified otherwise:
It must be noted that, as used in this specification and the appended claims, the singular forms "a," "an" and "the" include plural referents unless the content clearly dictates otherwise.

The term "curing" as used herein refers to the composition that becomes harder or sets-in as a result of a chemical change/reaction.

The term "substrate" is meant throughout the present document a solid body on whose surface an adhesive bond takes place, or has taken place.

The term "heat stable substrate" as used herein is meant to describe materials which are dimensionally stable, at least during the cure time, at a curing temperature of 100-220°C, preferably 120-200°C.

The term "one-component" and like terms as used herein, refer to an adhesive composition provided in the form of a single component system, wherein all the adhesive components are combined and stored in a single container.

The epoxy resin adhesive is one-component, meaning that the constituents of the epoxy resin adhesive, more particularly the epoxy resin and the hardener, are present in one component, without curing taking place at usual ambient temperature or room temperature. The one-component epoxy resin adhesive is therefore storage-stable. It can therefore be handled in this form, whereas with two-component systems the components cannot be mixed until immediately prior to use.

The curing of the one-component epoxy resin adhesive is accomplished by heating, typically at a temperature of more than 70°C, as in the range from 100 to 220°C, for example.

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

A filler, as this term is used in the present application, is a material which is non-reactive towards other constituents. Typically, the term filler refers to any material, matter, component and/or composition which is added to thicken the coated or casted composition, support its structure and simply increase the volume of the composition and/or to lower the cost. Fillers are usually comprised of cheap and inert materials, such as one or more of calcium carbonate, calcium oxide and fumed silicas etc.

The term "additive(s)" used herein is meant to comprise a component, agent, composition and the like usually added in smaller amounts (e.g. less than 0.5%, 0.04%, 0.2%, 1% or 0.8% of the total composition) and yet give a very significant effect on the product. Often, composition and/or adhesive composition comprises one or more additives.

As used herein, the term "contactless" refers to absence of direct physical contact between the temperature sensor and the reference surface. In a particular example, the contactless temperature sensor of the heating device of the present specification is not directly physically coupled to the heat stable substrate in order to provide the surface temperature reading.

The term "Diluent" is a substance used to dilute and to reduce the viscosity of the composition.

The term "Latent Hardener" as used herein refers to the hardener that can be stored for a long period of time after mixing in an epoxy resin and initiates hardening reaction when it is exposed to heat, light, pressure, moisture, or any other specific stimulus.

The term "Toughener" as used herein refers to a compound that, when incorporated (i.e. intimately mixed or covalently bound) into a substrate, imparts increased resilience towards mechanical challenges. For example, a toughener added to a compound may increase impact-, or scratch resistance, or may increase resistance to tear initiation and tear propagation.

The present invention relates in a first aspect relates to a method for adhesively bonding a heat-stable substrate, the heat stable substrate including one or more parts, comprising the steps of:
i) applying a one-component adhesive to the surface of a first part **S1** of the heat-stable substrate;
ii) contacting the applied one component adhesive with the surface of a second part **S2** of the heat-stable substrate;
iii) measuring the surface temperature of the heat stable substrate using a heating device, wherein the said heating device is a surface temperature-controlled heating device that comprises atleast one contactless temperature sensor; and
iv) heat curing the one component adhesive at a temperature of 100-220°C, more particularly of 120-200°C, preferably between 160 and 190°C using the heating device.

In the succeeding pages we have first described/discussed different components/constituents used for implementing the inventive method of the present application.

### Heat Stable Substrate

Heat-stable substrate are meant to describe materials which are dimensionally stable, at least during the cure time, at a curing temperature of 100-220°C, preferably 120-200°C. They are, more particularly, metals and plastics such as ABS, polyamide, polyphenylene ethers, compounded materials such as SMC, unsaturated polyesters GRP and composite epoxide or acrylate materials. Particularly heat-stable plastics, furthermore, are polysulfones or polyethersulfones.

The heat stable substrate includes one or more parts. Preferably, the heat stable substrate includes a first part **S1** and a second part **S2.** In the heat stable substrate, the first part **S1** and the second parts **S2** are adhesively bonded by implementing the method of the present invention.

Preferably, the first part **S1** and the second part **S2** are made up from the same material.

Preferably, the first part **S1** and the second part **S2** are made up from the different materials.

Preferably, the heat stable substrate is of metal or plastic.

A preferred application is when at least one of the first part **S1** and the second part **S2** is of metal. More particularly the metal is a metal which has been coated by cathodic electrocoating (CEC).

Considered a particularly preferred use is the adhesive bonding of identical or different metals, particularly in body construction within the automotive industry. The preferred metals are, in particular, steel, especially electrolytically galvanized, hot dip galvanized, oiled steel, Bonazinc-coated steel, and subsequently phosphated steel, and also aluminium, particularly in the versions typically encountered in car making.

### One component Adhesive

The inventive method of the present invention employs use of a one-component adhesive. Preferably, the one-component adhesive is a heat curable structural adhesive, more preferably a one-component thermosetting epoxy resin adhesive.

Preferably, the thermosetting one-component epoxy resin adhesive comprises at least one epoxy resin **A** having on average more than one epoxide group per molecule. The epoxide group is preferably in the form of a glycidyl ether group.

Preferably, the fraction of the epoxy resin **A** having on average more than one epoxide group per molecule is preferably from 25 -70 wt%, 25 -60 wt%, 30 - 55 wt%, 30 -50 wt%, more preferably 30 -45 wt%, based on the total weight of the one-component thermosetting epoxy resin adhesive.

The epoxy resin **A** having on average more than one epoxide group per molecule is preferably a liquid epoxy resin or a solid epoxy resin. The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders.

Preferred epoxy resins have the formula (II)

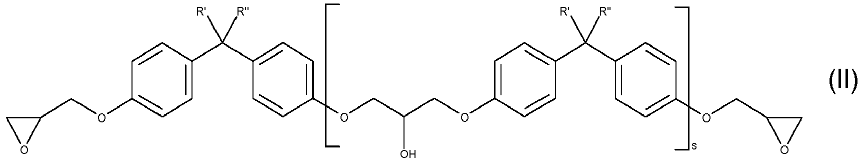

In this formula, the substituents R' and R" independently of one another are either H or CH₃.

In solid epoxy resins, the index s has a value of > 1.5, more particularly from 2 to 12.

Solid epoxy resins of this kind are available commercially, for example, from Dow or Huntsman or Hexion.

Compounds of the formula (II) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite® GY 250, Araldite® PY 304, Araldite® GY 282 (Huntsman) or D.E.R.™ 331 or D.E.R.™ 330 (Dow) or Epikote 828 (Hexion).

Of further suitability as epoxy resin **A** are what are called epoxy novolacs. These compounds have, in particular, the following formula: 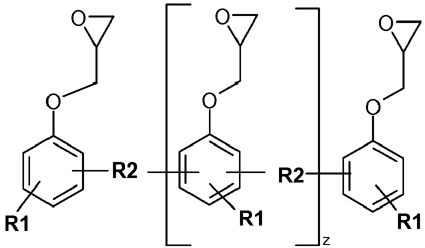 where **R2** = 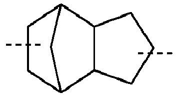 or CH₂, **R1** = H or methyl and z = 0 to 7.

More particularly these are phenol-epoxy or cresol-epoxy novolacs (**R2** = CH₂).

Epoxy resins of these kinds are available commercially under the tradename EPN or ECN and also Tactix® from Huntsman, or within the product series D.E.N.™ from Dow Chemical.

The epoxy resin **A** is preferably a liquid epoxy resin of the formula (II).

In one particularly preferred embodiment, the thermosetting epoxy resin composition comprises not only at least one liquid epoxy resin of the formula (II) with s < 1, more particularly less than 0.2, but also at least one solid epoxy resin of the formula (II) with s > 1.5, more particularly from 2 to 12.

It is advantageous, moreover, if the fraction of the aforesaid liquid epoxy resin is from 5 -40 wt%, 10 -35 wt%, 15 -35 wt%, more preferably 20 -30 wt%, based on the total weight of the one-component thermosetting epoxy resin adhesive.

It is advantageous, moreover, if the fraction of the aforesaid solid epoxy resin is from 5 -30 wt%, 5 -25 wt%, 5 -20 wt%, more preferably 10 -15 wt%, based on the total weight of the one-component thermosetting epoxy resin adhesive.

The thermosetting one-component epoxy resin adhesive further comprises at least one latent hardener for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener containing nitrogen.

The latent hardener is preferably selected from dicyandiamide, guanamines, guanidines, aminoguanidines and derivatives thereof, substituted ureas, imidazoles and amine complexes, preferably dicyandiamide.

The fraction of the latent hardener is preferably 0.5 to 12 wt%, more preferably 1 to 8 wt%, more particularly 2-6 wt%, based on the total weight of the epoxy resin adhesive.

The one-component thermosetting epoxy resin adhesive preferably comprises at least one toughness improver **D.** The toughness improvers **D** may be solid or liquid.

More particularly the toughness improver **D** is selected from the group consisting of terminally blocked polyurethane polymers **D1,** liquid rubbers **D2** and core-shell polymers **D3**. With preference the toughness improver **D** is selected from the group consisting of terminally blocked polyurethane polymers **D1** and liquid rubbers **D2.**

Where the toughness improver **D** is a terminally blocked polyurethane polymer **D1,** it is preferably a terminally blocked polyurethane prepolymer of the formula (I).

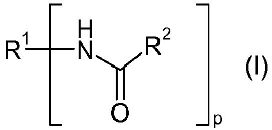

In this formula, R¹ is a p-valent radical of a linear or branched polyurethane prepolymer terminated by isocyanate groups, following the removal of the terminal isocyanate groups, and p has a value of 2 to 8.

Moreover, R² independently at each occurrence is a substituent which is selected from the group consisting of

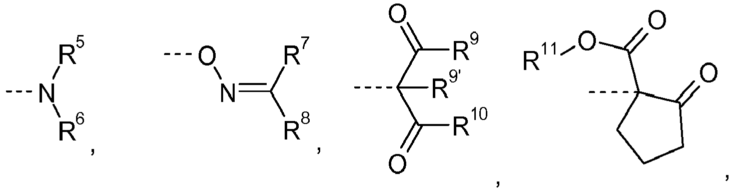

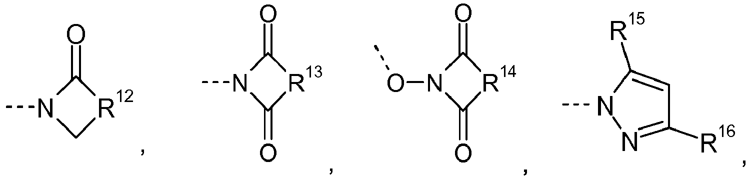

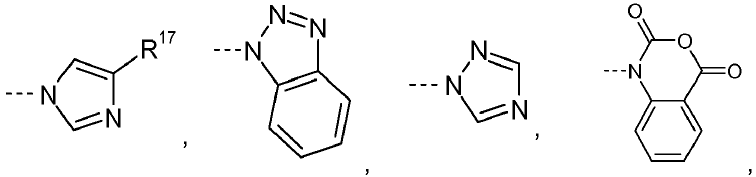

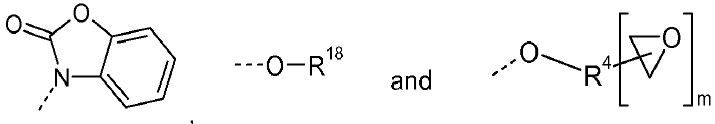

In these formulae, R⁵, R⁶, R⁷ and R⁸ each independently of one another are an alkyl or cycloalkyl or aralkyl or arylalkyl group, or R⁵ together with R⁶, or R⁷ together with R⁸, forms part of a 4- to 7-membered ring which is optionally substituted.

Moreover, R^{9'} and R¹⁰ each independently of one another are an alkyl or aralkyl or arylalkyl group or are an alkyloxy or aryloxy or aralkyloxy group, and R¹¹ is an alkyl group.

R¹², R¹³ and R¹⁴ each independently of one another are an alkylene group having 2 to 5 carbon atoms, which optionally has double bonds or is substituted, or are a phenylene group or are a hydrogenated phenylene group.

R¹⁵, R¹⁶ and R¹⁷ each independently of one another are H or are an alkyl group or are an aryl group or an aralkyl group, and R¹⁸ is an aralkyl group or is a mono- or polycyclic, substituted or unsubstituted aromatic group which optionally has aromatic hydroxyl groups.

Lastly, R⁴ is a radical of an aliphatic, cycloaliphatic, aromatic or araliphatic epoxide containing a primary or secondary hydroxyl group, after the removal of the hydroxyl and epoxide groups, and m has a value of 1, 2 or 3.

R¹⁸ should be considered to comprise, in particular, on the one hand, phenols or polyphenols, more particularly bisphenols, after removal of a hydroxyl group. Preferred examples of such phenols and bisphenols are, in particular, phenol, cresol, resorcinol, pyrocatechol, cardanol (3-pentadecenylphenol (from cashew nut shell oil)), nonylphenol, phenols reacted with styrene or with dicyclopentadiene, bisphenol A, bisphenol F and 2,2'-diallylbisphenol A. R¹⁸ should be considered on the other hand to comprise, in particular, hydroxybenzyl alcohol and benzyl alcohol after removal of a hydroxyl group.

If R⁵, R⁶, R⁷, R⁸, R⁹, R^{9'}, R¹⁰, R¹¹, R¹⁵, R¹⁶ or R¹⁷ is an alkyl group, this group more particularly is a linear or branched C₁-C₂₀ alkyl group.

If R⁵, R⁶, R⁷, R⁸, R⁹, R^{9'}, R¹⁰, R¹⁵, R¹⁶, R¹⁷ or R¹⁸ is an aralkyl group, this moiety is more particularly an aromatic group bonded via methylene, more particularly a benzyl group.

If R⁵, R⁶, R⁷, R⁸, R⁹, R^{9'} or R¹⁰ is an alkylaryl group, this group is more particularly C₁ to C₂₀ alkyl group bonded via phenylene, such as tolyl or xylyl, for example.

The radicals R² are preferably the substituents of the formulae

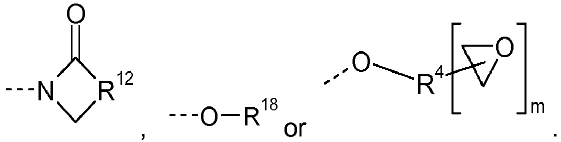

A preferred substituent of the formula 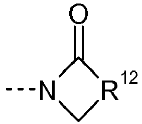 is ε-caprolactam after removal of the NH proton.

Preferred substituents of the formula ---O-R¹⁸ are monophenols or polyphenols, more particularly bisphenols, after removal of a phenolic hydrogen atom. Particularly preferred examples of such radicals R² are radicals which are selected from the group consisting of

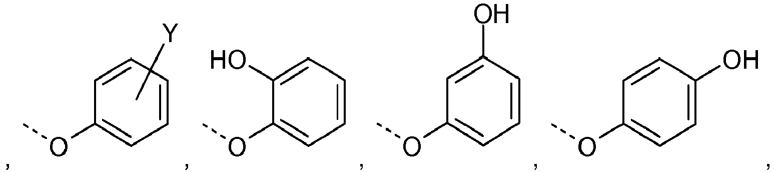

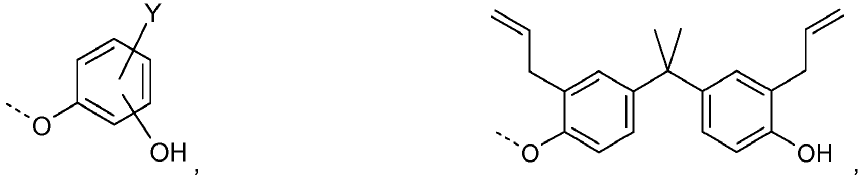

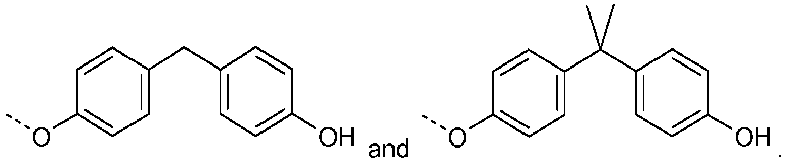

The radical Y in these formulae is a saturated, aromatic or olefinically unsaturated hydrocarbyl radical having 1 to 20 carbon atoms, more particularly having 1 to 15 carbon atoms. Preferred as Y are, in particular, allyl, methyl, nonyl, dodecyl, phenyl, alkyl ether, carboxylic ester or an unsaturated C₁₅ alkyl radical having 1 to 3 double bonds.

Most preferably R² is ---O-R¹⁸.

The terminally blocked polyurethane prepolymer of the formula (I) is prepared from the linear or branched polyurethane prepolymer, terminated by isocyanate groups, with one or more isocyanate-reactive compounds R²H. If two or more such isocyanate-reactive compounds are used, the reaction may take place sequentially or with a mixture of these compounds.

The reaction preferably takes place such that the one or more isocyanate-reactive compounds R²H are used stoichiometrically or in a stoichiometric excess, in order to ensure that all of the NCO groups have undergone reaction.

The polyurethane prepolymer having isocyanate end groups on which R¹ is based may be prepared from at least one diisocyanate or triisocyanate and also from a polymer **Q_{PM}** having terminal amino, thiol or hydroxyl groups and/or from an optionally substituted polyphenol **Q_{PP}.**

Suitable diisocyanates are aliphatic, cycloaliphatic, aromatic or araliphatic diisocyanates, especially commercial products such as methylenediphenyl diisocyanate (MDI), hexamethylene diisocyanate (HDI), toluene diisocyanate (TDI), tolidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc., and also their dimers. Preferred are HDI, IPDI, MDI or TDI.

Suitable triisocyanates are trimers or biurets of aliphatic, cycloaliphatic, aromatic or araliphatic diisocyanates, more particularly the isocyanurates and biurets of the diisocyanates described in the preceding paragraph. It is of course also possible to use suitable mixtures of di- or triisocyanates.

Particularly suitable as polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, more particularly of 600-4000, preferably of 700-2200 g/equivalent of NCO-reactive groups.

Preferred polymers **Q_{PM}** are polyols having average molecular weights of between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers, and mixtures thereof.

Especially preferred as polymers **Q_{PM}** are α,ω-dihydroxypolyalkylene glycols having C₂-C₆ alkylene groups or having mixed C₂-C₆ alkylene groups, which are terminated with amino, thiol or, preferably, hydroxyl groups. Particularly preferred are polypropylene glycols or polybutylene glycols. Further particularly preferred are hydroxyl-group-terminated polyoxybutylenes.

Especially suitable as polyphenol **Q_{PP}** are bis-, tris- and tetraphenols. The term refers not only to pure phenols, but instead also, where appropriate, to substituted phenols. The nature of the substitution can be very diverse. Understood more particularly by this is substitution directly on the aromatic ring system to which the phenolic OH group is bonded. Phenols, moreover, are not only monocyclic aromatics, but also polycyclic or fused aromatic or heteroaromatics, having the phenolic OH group directly on the aromatic or heteroaromatic moiety.

In one preferred embodiment, the polyurethane prepolymer is prepared from at least one diisocyanate or triisocyanate and also from one polymer **Q_{PM}** having terminal amino, thiol or hydroxyl groups. The polyurethane prepolymer is prepared in a manner known to the person skilled in the polyurethane art, more particularly by using the diisocyanate or triisocyanate in a stoichiometric excess in relation to the amino, thiol or hydroxyl groups of the polymer **Q_{PM}**.

The polyurethane prepolymer having isocyanate end groups is preferably elastic in nature. It preferably exhibits a glass transition temperature Tg of less than 0°C.

The toughness improver **D** may be a liquid rubber **D2**. This may be, for example, a carboxyl-terminated or epoxide-terminated polymer.

In a first embodiment, this liquid rubber may be a carboxyl- or epoxide-terminated acrylonitrile/butadiene copolymer or a derivative thereof. Liquid rubbers of this kind are available commercially, for example, under the name Hypro/Hypox® CTBN and CTBNX and ETBN from Emerald Performance Materials. Suitable derivatives are, in particular, elastomer-modified prepolymers containing epoxide groups, of the kind marketed commercially under the product line Polydis®, especially from the product line Polydis® 36., by the company Struktol® (Schill+Seilacher Group, Germany), or under the product line Albipox (Evonik, Germany).

In a second embodiment, this liquid rubber may be a polyacrylate liquid rubber, which is fully miscible with liquid epoxy resins and which separates only when the epoxy resin matrix is cured, to form microdroplets. Liquid polyacrylate rubbers of this kind are available, for example, under the designation 20208-XPA from Dow.

It is of course also possible to use mixtures of liquid rubbers, more particularly mixtures of carboxyl- or epoxide-terminated acrylonitrile/butadiene copolymers or of derivatives thereof.

The toughness improver **D** in a third embodiment may be a core-shell polymer **D3**. Core-shell polymers consist of an elastic core polymer and a rigid shell polymer. Particularly suitable core-shell polymers are composed of a core of elastic acrylate polymer or butadiene polymer, surrounded by a rigid shell of a rigid thermoplastic polymer. This core-shell structure either forms spontaneously by separation of a block copolymer, or is dictated by the polymerization regime as latex or suspension polymerization with subsequent grafting. Preferred core-shell polymers are those known as MBS polymers, which are available commercially under the trade name Clearstrength™ from Arkema, Paraloid™ from Dow or F-351™ from Zeon.

With particular preference the one-component thermosetting epoxy resin adhesive comprises not only terminally blocked polyurethane polymers **D1** but also liquid rubbers **D2**.

The fraction of toughness improver **D** is preferably from 5 -30 wt%, 7 -25 wt%, 10 -20 wt%, more preferably 10 -15 wt%, based on the total weight of the epoxy resin adhesive.

In one preferred embodiment, the one-component thermosetting epoxy resin adhesive further comprises at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, colour pigments. Particularly preferred are fillers selected from the group consisting of calcium carbonate, calcium oxide and fumed silicas.

The total fraction of the overall filler **F** is advantageously 5-40 weight%, preferably 20-40 weight%, based on the total weight of the epoxy resin adhesive.

The one-component thermosetting epoxy resin adhesive may comprise further constituents, especially catalysts, stabilizers, particularly heat and/or light stabilizers, thixotropic agents, plasticizers, solvents, dyes and pigments, corrosion inhibitors, surfactants, defoamers and adhesion promoters.

In one preferred embodiment, the one-component thermosetting epoxy resin adhesive comprises a physical or chemical blowing agent. Such blowing agents are available for example as Expancel™ from Akzo Nobel or Celogen™ from Chemtura. The fraction of the blowing agent, where used, is for example 0.1 to 3 wt%, based on the weight of the one-component thermosetting epoxy resin adhesive.

A particularly preferred thermosetting one-component epoxy resin adhesive comprises:
- 5-40 wt%, 10-35 wt%, 15-35 wt%, more preferably 20-30 wt%, based on the total weight of the one-component thermosetting epoxy resin adhesive, of a liquid epoxy resin;
- 5-30 wt%, 5-25 wt%, 5-20 wt%, more preferably 10-15 wt%, based on the total weight of the one-component thermosetting epoxy resin adhesive, of a solid epoxy resin;
- 1-8 wt%, more particularly 2-6 wt%, based on the total weight of the one-component thermosetting epoxy resin adhesive, of at least one latent hardener for epoxy resins, more particularly dicyandiamide;
- 5-30 wt%, 7-25 wt%, 10-20 wt%, more preferably 10-15 wt%, based on the total weight of the epoxy resin adhesive, of at least one toughness improver **D,** selected from the group consisting of terminally blocked polyurethane polymers **D1** and liquid rubbers **D2;**
- preferably 0.1 to 3 wt%, based on the weight of the one-component thermosetting epoxy resin adhesive, of a physical of chemical blowing agent;
- preferably 5-40 weight%, preferably 20-40 weight%, based on the total weight of the epoxy resin composition, of a filler **F** selected from the group consisting of calcium carbonate, calcium oxide and fumed silicas.

It may further be advantageous if the preferred one-component thermosetting epoxy resin adhesive consists to an extent of more than 80 weight%, preferably more than 90 weight%, more particularly more than 95 weight%, especially preferably more than 98 weight%, most preferably more than 99 weight%, based on the total weight of the epoxy resin adhesive, of the aforementioned constituents.

### Heating device

The method of the present invention employs a heating device, more preferably a surface temperature controlled heating device that comprises at least one contactless temperature sensor. The surface temperature controlled heating device is used for measuring the surface temperature of the heat stable substrate and performing heat-curing of the one component adhesive.

Preferably, the heating device is a heat gun, more preferably a hand-held heat gun. The heat gun has an in-built contactless surface temperature sensor. The integration of the functions of a heat gun and surface temperature sensor into one device enables more precise and efficient heating of the surface of the heat stable substrate.

Suitable example of the heat gun which can be employed to implement the method of the present invention is "Surface Temperature Controlled heat gun: Master Proheat STC Model PH-1600, Master Appliance Corp. Racine, WI, USA".

The components of the exemplary heating device used for implementing the method of the present invention are as described in the succeeding paragraphs.

Some of the basic components of the exemplary heating device or heat gun used for the implementation of the present invention includes a housing, a heating element, a barrel portion, a nozzle, a trigger, a surface temperature controlled sensor, a distance sensor, an LCD display screen, a laser targeting system, a microprocessor, a control panel (or user controls) and an electrical cord.

The housing encases the heating assembly and insulates it so that a user can safely hold and operate the heat gun. The housing of the heat gun is preferably made of a plastic resin material, such as Lexan from General Electric, and manufactured using a process such as injection molding or the like. However, other materials and processes can be used to fabricate the housing. The housing is ergonomically designed for ease of use by the user.

The housing is preferably corded with the electrical cord to draw electricity from a source. However, a battery powered heat gun is also contemplated.

The housing supports the heating element, the sensors, the display screen, the user controls and the control circuitry thereon and therein. These components are arranged to allow for efficient operation. The housing includes a barrel portion and a handle portion. The handle portion includes a trigger to allow for activation of the heat gun. The trigger includes a switch to enable the functioning of the heat gun. The barrel portion terminates in a nozzle that directs emits air toward the surface of the heat stable substrate.

The heat gun comprises a contactless surface temperature sensor (or surface temperature thermometer) which measures the surface temperature of the target that is receiving the heated air emitted from the heating element. An example of such a surface thermometer available on the market is the Cen-Tech Non-Contact Laser Thermometer available from www.harborfreight.com. This is a stand-alone unit with its own surface temperature indicator. The present invention uses technology as exemplified by the above commercial instrument or other similar instruments.

Preferably, the contactless surface temperature sensor is mounted on the heat gun adjacent the nozzle so that the thermometer points at the desired target. This construction permits the operator to measure the surface temperature of the target with only one hand. Further, this construction also permits simultaneous measurement of the surface temperature of the target as heat is directed at the target. The surface temperature sensor (or surface temperature thermometer) is outside the heated air stream of the heat gun, so that it measures the temperature of the target, not the temperature of the heated air. However, it should be noted that other positions can be utilized. The contactless surface temperature sensor should be on the position on the heat gun to enable the sensor to be operable without being affected by the temperatures within the housing or other extraneous disturbances. This can also be accomplished through calibration such that the heat flow adjacent the sensor can be compensated for.

Preferably, the contactless temperature sensor is infrared type. Suitable example of the commercially available contactless surface temperature sensors includes model 66 IR Thermometer available from Fluke Corporation of Everett, Wash. as. It should be noted, however, that other types of commercially available contactless surface temperature sensors can also be employed to measure surface temperature. The sensor is preferably selected to accommodate the temperature ranges and emissivities of each surface 50 of each work piece 34 that may be worked upon.

In operation, the contactless surface temperature sensor senses temperatures in a range compatible with that of the heating element provided on the heat gun. The heat gun is controlled by the desired or pre-set surface temperature values inputted by the user and is accurate to within a very small percentage of an actual, desired or pre-set temperature.

Preferably the heating device comprises at least one heating element. The heating element encompassed in the heating device is resistive type, such as an enclosed ceramic type, which can include a standby heat feature in order to achieve significant reduction in heating time.

Preferably the heating device comprises at least one microprocessor in communication with the heating element.

Preferably, the heating device comprises a laser targeting system. The laser targeting system assist in aiming the contactless surface temperature sensor at the target. More preferably, the laser or laser targeting system is mounted on the contactless surface temperature sensor so that the laser pivots with the contactless surface temperature sensor.

Preferably, the heating device comprises a built-in display screen, preferably a liquid crystal display (LCD) screen, for displaying the surface temperature of a target. The target in the present invention disclosure typically refers to the surface of the heat stable substrate wherein the repair or bonding operation is performed. The surface temperature indicated by the contactless surface temperature sensor and surface temperature desired by the user both are displayed on the liquid crystal display (LCD) screen mounted on the heat gun. Preferably, the liquid crystal display (LCD) screen comprises an LED, or series of LEDs to suitably lit the liquid crystal display (LCD) screen. The other types of display screen can also be employed.

The liquid crystal display (LCD) screen displays various settings, surface temperature values and other real time operating parameters. The liquid crystal display (LCD) screen is positioned in such a way that it is easily viewable by the user when the heat gun is held in various positions by the user. The liquid crystal display (LCD) screen of the heat gun displays desired surface temperature and continuous real time surface temperature. Further, different parameters and information can also be displayed on the surface of the liquid crystal display (LCD) screen viz. continuous real time exit air temperature, distance from the heating substrate, selected program if any.

Preferably, the heating device comprises one or more user controls to allow the user to enter parameter values and to control the operation of the heat gun. Any suitable type of user control such a knob, a up arrow, a down arrow, a right arrow, a left arrow, a push button, a menu/set button etc. The user controls allow the user to enter, pre-set and/or program operating parameters. The user can program a desired surface temperature for the heat stable substrate by using the one or more user controls. Further, the user controls can also be used to select pre-programmed settings for repetitive jobs, for example a heating program for plastics, aluminum, steel, wood or the like. As such, the user can customize pre-set values and programs for more specific industrial applications.

Preferably the contactless temperature sensor and the microprocessor form a feedback loop for controlling the operation of the heating element of the heating device.

Preferably, the heating device automatically regulates the heating element to maintain desired surface temperature the target. Once the user sets the desired surface temperature for performing the method of the present invention, the heating element of the heat gun is automatically regulated to ensure that the curing temperature the adhesive (or more specifically the one-component thermosetting epoxy resin adhesive) is maintained at the desired pre-set value. The contactless surface temperature sensor identifies the temperature at site of repair/bonding and send feedback to microprocessor of the heating gun for controlling the operation of the heating element of the heating gun.

In an embodiment of the invention, the user operates the heating device by plugging in the heating device into a socket to power the device. Thereafter user, enters the desired parameter values or selects predefined programs through user controls. On pressing the trigger or switch provided on the handle of the heating device, the heating device begin to operate in accordance with the inputted values or selected program and will continue until a program terminates.

Preferably, the heating device further comprises a distance sensor to determine the distance between the heat stable substrate and the heating device. The presence of distance sensor further increases the accuracy of the heat gun in providing correct air temperature for obtaining the desired temperature at the site of the repair or bonding of heat stable substrate.

### Method

The inventive method of the present invention is suitable for adhesively bonding a heat stable substrate. The heat stable substrate described above includes a first part **S1** and a second part **S2**. A one-component adhesive, preferably a one component thermosetting epoxy resin adhesive, is applied to the surface of the first part **S1** of the heat stable substrate. Thereafter, the surface of the second part **S2** is contacted with the one-component adhesive. A heating device, preferably a surface temperature controlled heating device (as described above in detail) is employed to measure the surface temperature of the heat stable substrate (at the site where the one-component adhesive is applied) and heat cure the one-component adhesive. Heat curing of the one component adhesive is performed at a temperature of 100-220°C, more particularly of 120-200°C, preferably between 160 and 190°C using the heating device.

The first part **S1** and the second part **S2** are more particularly the heat-stable materials already mentioned above.

A method of this kind for the bonding of heat-stable materials results in an article comprising a cured adhesively bonded assembly. An article of this kind is preferably a vehicle or a component for mounting in or on a vehicle.

Furthermore, the compositions of the invention are suitable not only for car making but also for other fields of application. Particularly noteworthy are related applications in the construction of means of transport such as ships, lorries, buses or rail vehicles, or in the construction of consumer goods such as washing machines, for example.

The materials bonded by means of a composition of the invention are employed at temperatures between typically 120°C and -40°C, preferably between 100°C and -40°C, more particularly between 80°C and -40°C.

A further particularly preferred use of the method of the present invention is for adhesively bonding or strengthening metal structures, or the strengthening filling of cavities in vehicle construction or sandwich panel construction. Particularly preferred is the use for the reinforcing filling of cavities in vehicle construction.

Preferably, the one-component thermosetting epoxy resin adhesive is applied in the melted state to the surface of the first part S1 and the second part S2 of the heat stable substrate.

It is possible accordingly to realize, simply, reinforcing elements for the strengthening of metallic structures featuring a heat stable substrate obtained by the method of the present invention.

These reinforcing elements are fixed on the metallic structure to be reinforced, or fixed in a cavity of the metallic structure to be reinforced. Fixing may take place here by a fixing means such as by a clip, a screw, a hook, a rivet, a groove or an adhesive, or else by means of suitable geometry of the structure to enable clamping. It is therefore preferred for the heat stable substrate to have a fixing means of this kind. It is especially preferred if the structure to be reinforced has a counter-piece corresponding to the fixing means, such as, for example, a projecting edge/hook or screw/screw thread.

A further aspect of the present invention therefore relates to an article comprising a cured adhesively bonded assembly, the cured adhesively bonded assembly being obtainable by the method described in details above.

In the following section the above described invention is further discussed with the help of Figures.

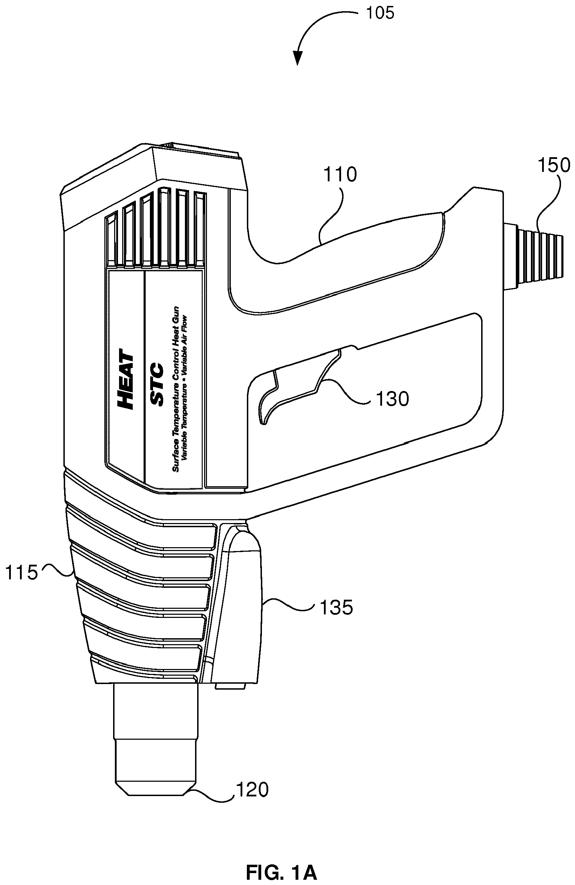

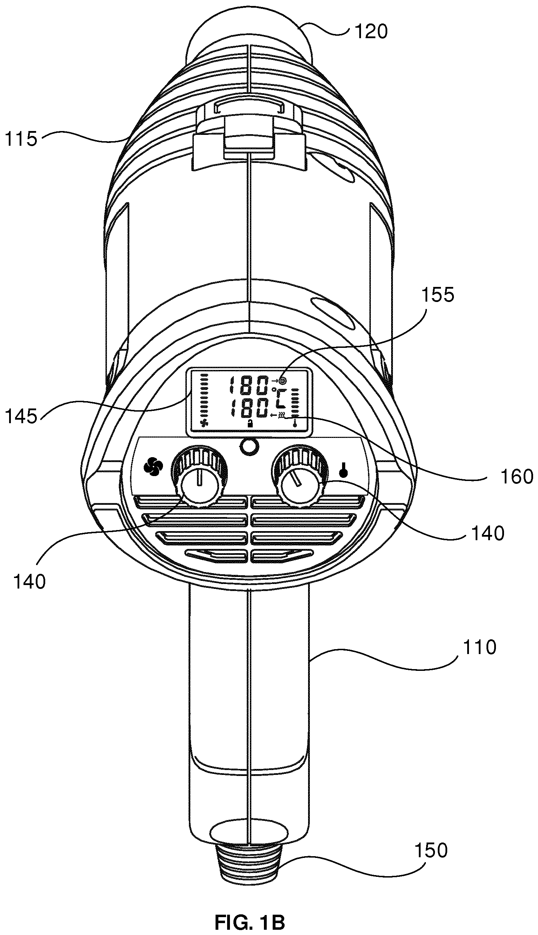

In Figure 1 a perspective view of a heating device used to implement the method of the invention is shown, in accordance with an embodiment of the invention.

The exemplary heating device depicted in the Figure 1 is a hand held device or more specifically a surface temperature controlled heat gun 105. The surface temperature controlled heat gun 105 essentially includes a contactless surface temperature sensor (not shown in figure). The surface temperature controlled heat gun 105 includes a housing 110, a heating element (not shown in figure), a barrel portion 115, a nozzle 120, a trigger 130, a laser targeting system 135, a microprocessor (not shown in Figure), control panel (or user controls) 140, a display screen 145, and an electric cord 150. The details functionalities of the various components of the surface temperature controlled heat gun are as described above in the preceding sections.

In Figure 1b the perspective view of display screen of the heating device used to implement the method of the invention is shown in accordance with an embodiment of the invention is shown.

The display screen 145 displays the desired surface temperature value 155 of the heat stable substrate as inputted by the user and the actual surface temperature value 160 of the heat stable substrate as measured by the surface temperature controlled heat gun 105.

Further, various other physical parameters, indicators and/or control options can also be provided on the display screen 145. The display screen 145 depicted in Figure 1b is an exemplary display screen of the surface temperature controlled heat gun 105 used. Preferably the display screen is Liquid crystal display (LCD) screen as described above.

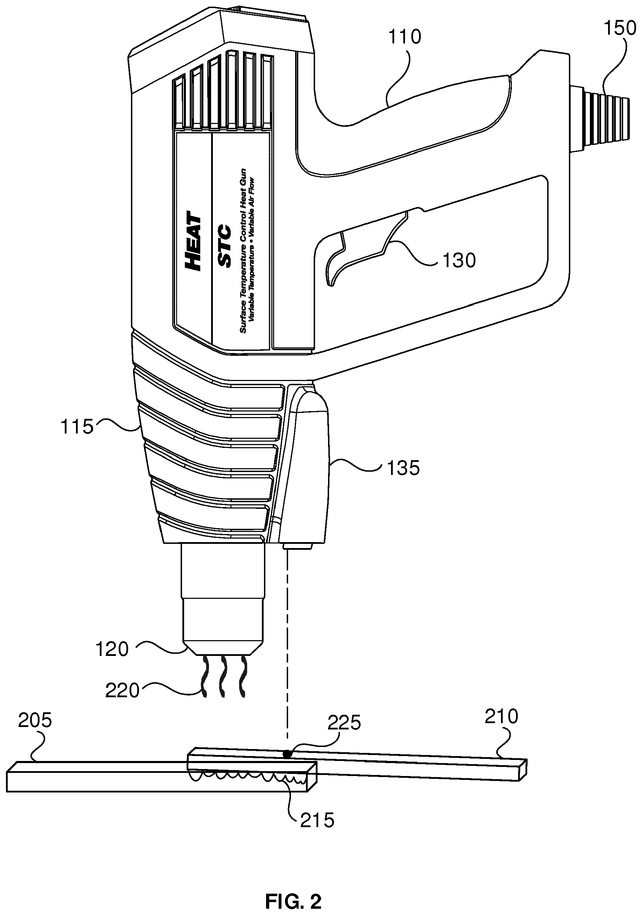

In Figure 2 the perspective view of a heating device performing the bonding operation in accordance with an embodiment of the invention is shown.

In the Figure 2, the first part **S1** 205 and the second part **S2** 210 are bonded with the one-component adhesive 215 by using the surface temperature controlled heat gun 105.

In a preferred embodiment of the invention the laser targeting system 135 enables the surface temperature controlled heat gun 105 to direct hot air 220 towards bonding/repair site of the heat stable substrate. The repair/ bonding site of the heat stable substrate includes the first part **S1** 205 on the surface of which the one-component adhesive 215 is applied and the surface of the second part **S2** 210 is contacted. In the overall construction the one-component adhesive 215 is sandwich between the overlapping surfaces of the first part S1 205 and the second part S2 210. A laser pointer 225 is targeted towards the bonding/repair site of the heat stable substrate by utilizing the laser targeting system 135. The surface temperature controlled heat gun 105 emits the hot air 220 towards the heat stable substrate comprising the first part **S1** 205 and the second part **S2** 210. The surface temperature controlled heat gun 105 is programmed in such a manner that it cures the one-component adhesive 215 present between the overlapping surfaces of the first part **S1** 205 and the second part **S2** 210 at desired temperature.

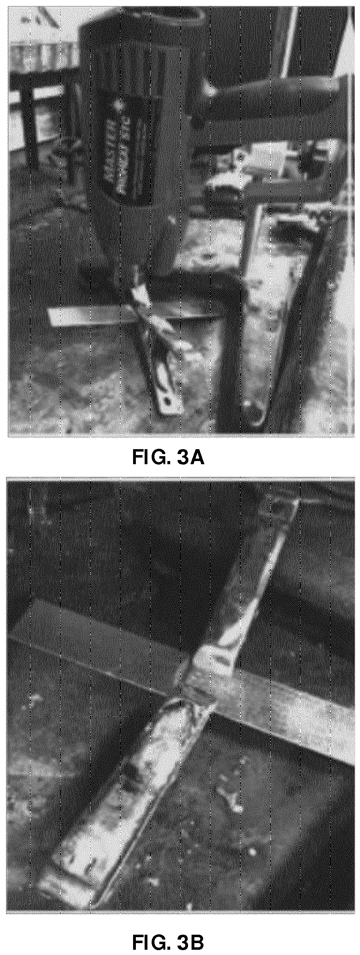

In Figure 3 the photographic images of a heating device performing the bonding operation in accordance with an embodiment of the invention is shown. In Figure 3a the sideview of the heating device performing bonding operation is shown and in Figure 3b the heat stable substrate having the first part **S1** 205 adhesive bonded with the one-component adhesive 215 to the surface of the second part **S2** 210 is shown. Further, the laser pointer 225 is also shown at the bonding/repair surface of the heat stable substrate.

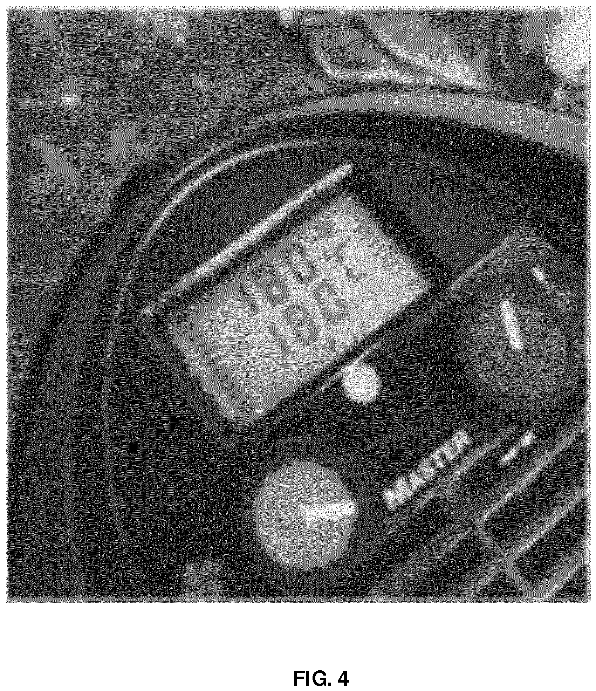

In figure 4 the photographic image of the display screen 145 of the surface temperature controlled heat gun 105 is shown.

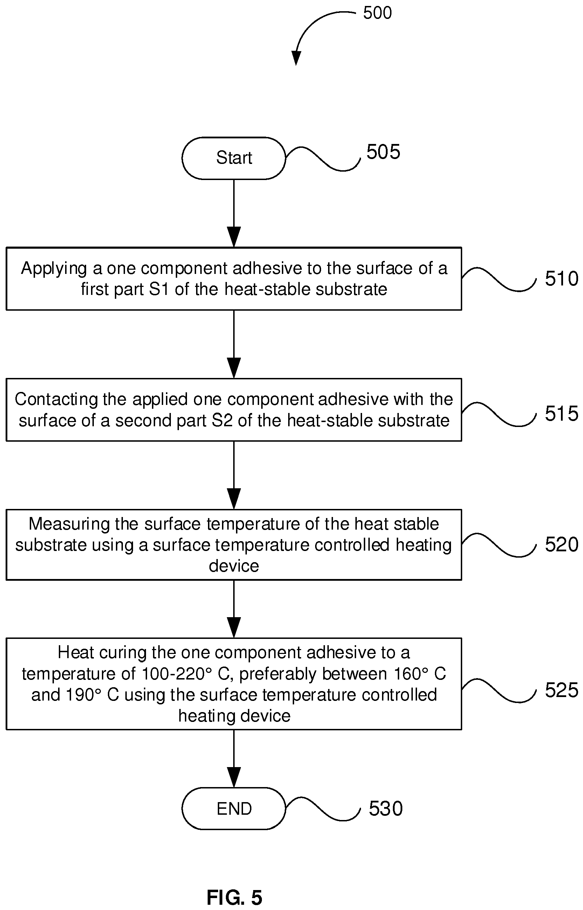

In Figure 5 depicts a flow chart of the method for adhesive bonding heat stable substrate in accordance with an exemplary embodiment of the present disclosure. The method 500 starts at step 505.

At a step 510, the one-component adhesive 215 is applied to the surface of the first part **S1** 205 of the heat stable substrate.

Preferably, the one component adhesive 215 is an epoxy based thermosetting adhesive. The one-component adhesive 215 is in the fluid or molten form. The details of the one-component adhesive 215 used are already described above in detail.

At a step 515, the applied one-component adhesive 215 is contacted with the surface of the second part **S2** 210 of the heat stable substrate. Thus, the heat stable substrate includes the first part **S1** 205 on the surface of which the one-component adhesive 215 is applied and the surface of the second part **S2** 210 is adhesively bonded.

At a step 520, the surface temperature of the heat stable substrate is measured by using the heating device, or more specifically the surface temperature controlled heat gun 105. The measured temperature reading is displayed on the display screen of the surface temperature controlled heat gun 105. Preferably, the surface temperature reading of the heat stable substrate is displayed on the display screen 145 in real-time during the bonding/repair operation.

At a step 525, the heat curing of the one-component adhesive is performed by using the heating device, or more specifically surface temperature controlled heat gun 105. The details of the heating device and its operational features required for implementing the inventive method of the present invention are already described above.

The surface temperature controlled heat gun 105 heat cure the one-component adhesive 215 to a temperature of 100-220°C, preferably between 160 and 190°C. Once the curing reaction is completed at the desired temperature, the adhesive bond between the first part **S1** 205 and the second part **S2** 210 is strengthened. This result in formation or repair of the heat stable substrate.

At a 530, the method 500 ends.

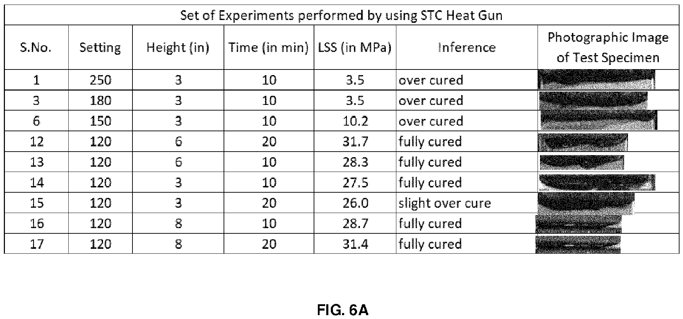

In Figure 6a the photographic images of the test specimen obtained from the inventive method of the present invention (i.e. with Surface temperature controlled heat gun 105) are depicted in accordance with the embodiments of the invention.

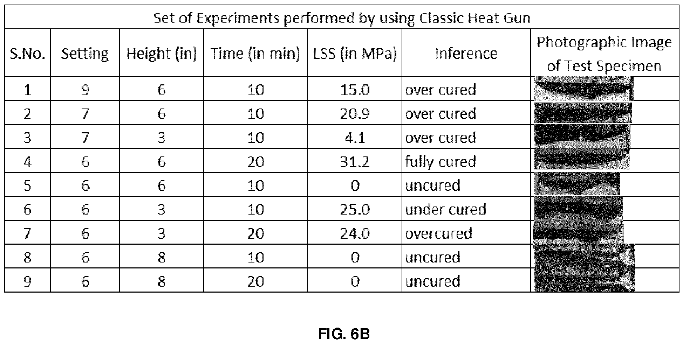

In Figure 6b the photographic images of the test specimen obtained from the method of the prior art (i.e. with classical heat gun) are depicted in accordance with the embodiments of the invention.

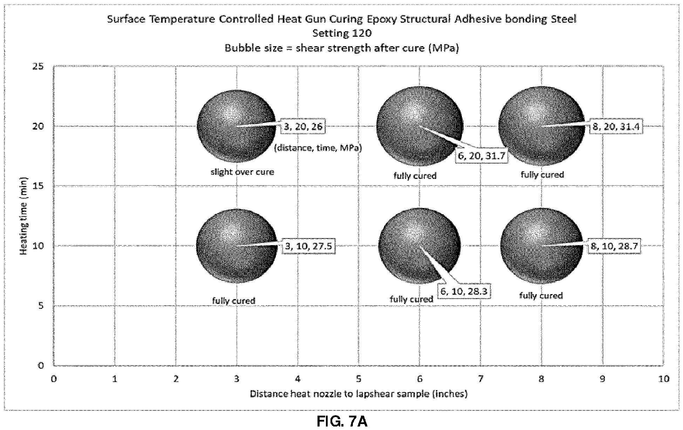

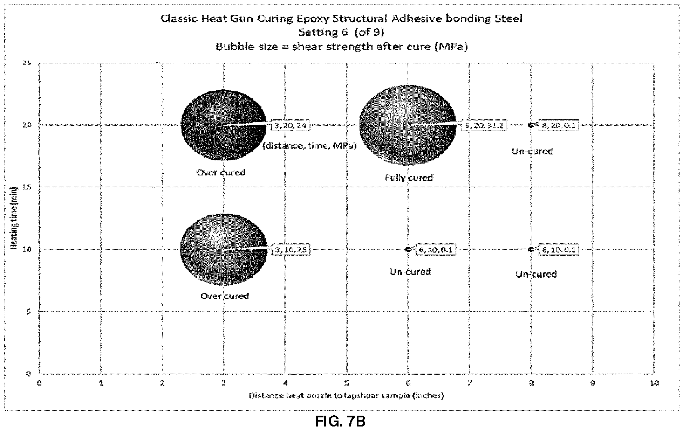

In Figure 7a and 7b represent the graphical output of the comparative studies performed by using the inventive method of the present invention (i.e. with Surface temperature controlled heat gun 105) and standard classical heat gun is showcased.

A bubble chart is plotted by utilizing the parameter values of a) heating time in minutes (represented by X axis), b) distance of the heat nozzle from a test sample or heat stable substrate (represented by Y axis) and c) tensile shear strength (LSS) value (represented by Bubble size). Further, details pertinent to curing characteristics i.e. whether fully cured, over cured or under cured are also depicted against each comparative experiment performed.

It is evident from the graphical representation that the inventive method of the present invention utilizing a surface temperature controlled heat gun 105 is advantageous over the methods of the prior art utilizing a classical heat gun or other heating means.

The invention is elucidated further in the text below by means of examples which, however, are not intended to restrict the invention in any way.

### Examples

Test methods used for the testing of the respective properties in the examples were as follows:

### Tensile shear strength (LSS)

The determination follows the general lines of ASTM D1002-10. The tensile shear strength was determined using the following set-up (dimensions in mm):
Test temperature: 23°C
Bond area: 12.7 mm × 25.4 mm
Adhesive layer thickness: 0.8 mm
Curing: 20 min at 170°C, or 40 min at 205°C
Test velocity: 13 mm/min

### Testing examples

The base formulation used for epoxy resin adhesives was a formulation as described below.

| **Raw material** | **wt%** |
|---|---|
| Liquid epoxy resin of formula (II) | 40 |
| Diluent | 1 |
| Dicyandiamide | 4 |
| Terminally blocked polyurethane polymers | 20 |
| Drying agent | 5 |
| Filler mixture of calcium carbonate, fumed silica, pigment | 30 |

The physical properties of the one-component epoxy resin adhesive obtained from the above mentioned formulation are as provided in Table 2.

| **Table 2** | |
|---|---|
| **Physical Properties** | **Value** |
| Viscosity; 25°C, oscillation 5 Hz, P/P 25 mm, 1 mm gap (CQP 584-1) (Pa.s) | 1300 |
| Lapshear strength @0.5 mm bond line 163C 20 min bake (1.3 mm DPC 340YS) MPa | 22 |
| Tensile Strength (MPa) | 28 |
| Elongation (%) | 30 |
| e-modulus (MPa) | 850 |

A series of tests were performed by varying the temperatures and the distance of the surface temperature controlled heat gun 105 and the heat stable substrate (i.e. 1.5 mm thick electrogalvanized steel). A surface temperature controlled heat gun "Master Proheat STC Model PH-1600" available from Master Appliance Corp. Racine, WI, USA" was employed. In the Table 3 the process parameters and the outcome of the heat curing experiment performed by using surface temperature controlled heat gun 105 are summarized.

| **Table 3: Set of Experiments Performed by using STC Heat Gun** | | | | | |
|---|---|---|---|---|---|
| S.No. | Setting | Height (in) | Time (in min) | LSS (in MPa) | Inference |
| 1 | 250 | 3 | 10 | 3.5 | over cured |
| 2 | 180 | 6 | 10 | 16.8 | over cured |
| 3 | 180 | 3 | 10 | 3.5 | over cured |
| 4 | 180 | 6 | 20 | 12.6 | over cured |
| 5 | 150 | 6 | 10 | 15.5 | over cured |
| 6 | 150 | 3 | 10 | 10.2 | over cured |
| 7 | 150 | 6 | 20 | 12.8 | over cured |
| 8 | 140 | 6 | 10 | 23.0 | over cured |
| 9 | 140 | 6 | 20 | 15.6 | over cured |
| 10 | 130 | 6 | 10 | 25.1 | over cured |
| 11 | 130 | 6 | 20 | 23.4 | over cured |
| 12 | 120 | 6 | 20 | 31.7 | fully cured |
| 13 | 120 | 6 | 10 | 28.3 | fully cured |
| 14 | 120 | 3 | 10 | 27.5 | fully cured |
| 15 | 120 | 3 | 20 | 26.0 | Slightly over cured |
| 16 | 120 | 8 | 10 | 28.7 | fully cured |
| 17 | 120 | 8 | 20 | 31.4 | fully cured |

In order to substantiate the findings of the inventive method of the present invention a similar set of tests were performed by using a classical heat gun. A standard classical heat gun "Varitemp Heat gun" having Model Number "ModelIVT-750C" available from Master Appliance Corp. Racine, WI, USA was employed. The classical heat gun has 0-9 setting dial for varying the heat output. In the Table 4 the process parameters and the outcome of the heat curing experiment performed by using the classical heat gun are summarized.

| **Table 4: Set of Experiments Performed by using Classical Heat Gun** | | | | | |
|---|---|---|---|---|---|
| S.No. | Setting | Height (in) | Time (in min) | LSS (in MPa) | Inference |
| 1 | 9 | 6 | 10 | 15.0 | over cured |
| 2 | 7 | 6 | 10 | 20.9 | over cured |
| 3 | 7 | 3 | 10 | 4.1 | over cured |
| 4 | 6 | 6 | 20 | 31.2 | fully cured |
| 5 | 6 | 6 | 10 | 0 | Uncured |
| 6 | 6 | 3 | 10 | 25.0 | under cured |
| 7 | 6 | 3 | 20 | 24.0 | Overcured |
| 8 | 6 | 8 | 10 | 0 | Uncured |
| 9 | 6 | 8 | 20 | 0 | Uncured |

With Classic heat gun, it is difficult to adjust to proper heat setting. As recited in experiment 2 depicted in Table 4, overcuring is observed on operating the heat gun at setting 7 and maintaining a distance (or height) of 6 inches between the heat gun and test specimen (i.e. electrogalvanized Aluminium sheet) within 10 minutes. Similarly, curing reaction is not observed on operating the heat gun at a setting 6 and maintaining a distance (or height) of 6 inches between the heat gun and test specimen (i.e. electrogalvanized Aluminium sheet).

In order to visually inspect the over curing of the adhesive, a blue pigment that turns green when subject to over-cure conditions is used in the one-component adhesive. During over-cure edges of the test plate turn green from blue and LSS values also decreases. Suitable example of such blue pigment includes Phthalo Blue (PB 15:3) CAS 147-14-8 at 0.3 wt%. The photographic images of the test specimen are depicted in Figure 6a and Figure 6b.

Further, in order to substantiate that the method of the present invention holds an advantage over the prior art, we have summarised the experimental findings of the comparative experiments in the Table 5.

| **Table 5: Comparative Study for Tensile Shear Strength (LSS)** | | | | | |
|---|---|---|---|---|---|
| **Inventive Method with STC Gun** | | | **State of the Art with Classical Heat Gun** | | |
| Distance to bond (in) | Heating Time (min) | Shear Strength (MPa) | Distance to bond (in) | Heating Time (min) | Shear Strength (MPa) |
| 3 | 10 | 27.5 | 3 | 10 | 25 |
| 3 | 20 | 26 | 3 | 20 | 24 |
| 6 | 10 | 28.3 | 6 | 10 | 0.1 |
| 6 | 20 | 31.7 | 6 | 20 | 31.2 |
| 8 | 10 | 28.7 | 8 | 10 | 0.1 |
| 8 | 20 | 31.4 | 8 | 20 | 0.1 |

It has been observed that by employing the inventive method of the present invention (i.e. with STC heat gun) the results are consistent over different distances and time. In case of the classical heat gun it is extremely difficult to achieve the desired curing of the one-component adhesive, as the samples are either over cured or not cured at all. Therefore, a classic heat gun alone is not suitable for curing one-component heat cured adhesive while an STC heat gun works well without much dependence on distance to object (3-8 inches) or time (10-20 minutes). At the proper heat setting, the inventive method with STC gun gives full cure at 6 inch distance to bond and at 3 inch distance.

With classic heat gun, drastically different cure depending on distance at given setting: at setting 6, distance 3 inches gives no cure, distance 3 inches gives nearly full cure. Further, graphical representation of the test results is showcased in Figure 7a and Figure 7b.

**Referral Numerals**

| | |
|---|---|
| Surface Temperature controlled Heat Gun | 105 |
| Housing | 110 |
| Barrel Portion | 115 |
| Nozzle | 120 |
| Trigger | 130 |
| Laser Targeting System | 135 |
| Control Panel/User Controls | 140 |
| Display Screen | 145 |
| Electric Cord | 150 |
| Desired Surface Temperature Value | 155 |
| Actual Surface Temperature value | 160 |
| First Part S1 of Heat Stable substrate | 205 |
| Second Part S2 of Heat Stable substrate | 210 |
| One Component Adhesive | 215 |
| Hot Air | 220 |
| Laser Pointer | 225 |

## Claims

1. A method for adhesively bonding a heat-stable substrate, the heat stable substrate including one or more parts, comprising the steps of
i) applying a one-component adhesive to the surface of a first part **S1** of the heat-stable substrate;
ii) contacting the applied one component adhesive with the surface of a second part **S2** of the heat-stable substrate;
iii) measuring the surface temperature of the heat stable substrate using a heating device, wherein the heating device is a surface temperature-controlled heating device that comprises at least one contactless temperature sensor; and
iv) heat curing the one component adhesive at a temperature of 100-220°C, more particularly of 120-200°C, preferably between 160 and 190°C using the heating device.

2. The method of claim 1, wherein the one-component adhesive is a heat curable structural adhesive, more preferably a one-component thermosetting epoxy resin adhesive.

3. The method of claim 2, wherein the one-component thermosetting epoxy resin adhesive comprises at least one epoxy resin **A** having on average more than one epoxide group per molecule, wherein fraction of the epoxy resin **A** having on average more than one epoxide group per molecule is from 25 -70 wt%, 25 - 60 wt%, 30 - 55 wt%, 30 -50 wt%, more preferably 30 -45 wt%, based on the total weight of the one-component thermosetting epoxy resin adhesive.

4. The method of any of claim 2-3, wherein the one-component thermosetting epoxy resin adhesive comprises at least one latent hardener, wherein the said latent hardener is selected from the group consisting of dicyandiamide, guanamines, guanidines, aminoguanidines and derivatives thereof, substituted ureas, imidazoles and amine complexes, preferably dicyandiamide.

5. The method of any of claim 2-4, wherein the one-component thermosetting epoxy resin adhesive comprises at least one toughness improver **D,** the fraction of toughness improver **D** being preferably from 5 -30 wt%, 7 -25 wt%, 10 - 20 wt%, more preferably 10 -15 wt%, based on the total weight of the one-component thermosetting epoxy resin adhesive.

6. The method of any of the proceeding claims, wherein the heat stable substrate is of metal or plastic.

7. The method of any of the proceeding claims, wherein the heating device is a heat gun, more preferably a hand-held heat gun.

8. The method of any of the proceeding claims, wherein the contactless temperature sensor is an infrared sensor.

9. The method of any of the proceeding claims, wherein the heating device comprises at least one heating element.

10. The method of claim 9, wherein the heating device comprises at least one microprocessor in communication with the heating element.

11. The method of claim 9 or 10, wherein the heating device automatically regulates the heating element to maintain desired surface temperature the target.

12. The method of any of the proceeding claims, wherein the heating device further comprises a distance sensor to determine the distance between the heat stable substrate and the heating device.

13. Use of the method of any of the preceding claims for adhesively bonding or strengthening metal structures or for strengthening filling of cavities in vehicle construction or sandwich panel construction.

14. Article comprising a cured adhesively bonded assembly, the cured adhesively bonded assembly being obtainable by the method according to any of the claims 1-12.
